# EUROPÄISCHE PATENTANMELDUNG

(11) **EP 1 136 730 A2**
(43) Veröffentlichungstag der Anmeldung: **26.09.2001**
(21) Anmeldenummer: 01106228.8
(22) Anmeldetag: 14.03.2001
(51) Int. Cl.: F16J 9/26

(54) **Kolbenring mit Verschleissschutzschicht sowie Verschleissschutzschicht für einen Kolbenring**

(30) Priorität: 23.03.2000 DE 10014515
(71) Anmelder: Federal-Mogul Burscheid GmbH, 51399 Burscheid (DE)
(72) Erfinder: Buran, Ulrich, Dipl.-Ing., 51399 Burscheid (DE); Münchow, Frank, 42929 Wermelskirchen (DE); Fischer, Manfred, Dr., 42799 Leichlingen (DE); Brand, Jochen, Dr., 38126 Braunschweig (DE)

(57) **Zusammenfassung**

Kolbenring mit einer, zumindest im Bereich der Lauffläche vorgesehenen Verschleißschutzschicht aus Aluminium und Sauerstoff, die im wesentlichen folgende Elemente (in Gew.-%) beinhaltet:
Al 50 bis 90
O **10** bis **50**,
und nach dem PVD- oder CVD-Verfahren aufgebracht ist, wobei die Schichtdicke max. 100 µm, insbesondere 5 bis 50 µm, beträgt.

## Beschreibung

Die Erfindung betrifft einen Kolbenring mit einer, zumindest im Bereich der Lauffläche vorgesehenen Verschleißschutzschicht.

Zur Verlängerung der Lebensdauer von Brennkraftmaschinen ist es allgemein bekannt, die Laufpartner Kolbenring/Zylinderlauffläche mit besonders verschleißfesten Schichten zu versehen.

Es ist bekannt, Kolbenringlaufflächen mit Verschleißschutzschichten zu versehen, die nach dem Plasmaspritzverfahren, nach galvanischen Verfahren, durch Nitrieren oder Verfahren der Dünnschichttechnologie aufgebracht sind.

Es ist bekannt, Dampfabscheideprozesse einzusetzen, mit denen dann die Laufflächen oder die gesamte äußere Umfangsfläche der Kolbenringe mit verschleißfesten Schichten versehen werden. Allgemein bekannt sind hier Verfahren der physikalischen bzw. chemischen Dampfabscheidung (PVD-/CVD-Verfahren). Zu den PVD-Verfahren gehören neben der Dampfabscheidung auch die Kathodenzerstäubung bzw. Vakuumbedampfung sowie die Ionenplattierung.

Der DE-A 43 25 520 ist unter anderem ein Kolbenring zu entnehmen, der laufflächenseitig eine Beschichtung aus einem reaktionsträgen, antiadhäsiven Metall (vorzugsweise Niob oder Zirkon) aufweist. Die Beschichtung soll im PVD-Arc-Verfahren aufgebracht werden.

Durch die US-A 5,449,547 ist ein hartes Beschichtungsmaterial sowie ein damit versehener Gleitkörper, wie ein Kolbenring, bekannt geworden. Die Hartschicht, für den aus Stahl, Gußeisen, Titan oder einer Titanlegierung bestehenden Gleitkörper beinhaltet entweder 3 bis 20 Gew.-% Sauerstoff oder 2 bis 11 Gew.-% Kohlenstoff, wobei der Sauerstoff bzw. der Kohlenstoff in einer CrN-Kristallstruktur enthalten ist und wobei Härten HV im Bereich zwischen 1600 und 2200 erreicht werden. Die Hartschicht wird vorzugsweise durch Ionenplattierung auf den Gleitkörper aufgebracht. Da beim PVD-Prozeß Sauerstoffgas an der Oberfläche des Kolbenringwerkstoffes oxidiert, ist die Gefahr gegeben, daß die verschleißfeste Schicht auf der Kolbenringoberfläche nicht optimal haftet und so abblättern kann.

Um dieses Problem zu lösen, ist es durch die US-A 5,582,414 bekannt, auf der Kolbenringoberfläche zunächst eine Zwischenschicht abzuscheiden, auf welche dann die Hartschicht durch Ionenplattierung abgeschieden wird. Die Zwischenschicht setzt sich zusammen aus wenigstens eines der Elemente oder Verbindungen aus der nachstehenden Gruppe Cr₂N, CrN, Cr bzw. Cr2N und CrN. Die Hartschicht soll 3 bis 20 Gew.-% Sauerstoff in einer CrN-Kristallstruktur enthalten und dann eine Härte HV zwischen 1600 und 2200 aufweisen.

Durch die US-A 5,820,131 ist ein Kolbenring mit einer Verschleißschutzschicht bekannt geworden, die auf Basis von Cr2N bzw. einer Mischung aus Cr2N und Cr durch Ionenplattierung auf der Lauffläche des Kolbenringes abgeschieden wird. Der Stickstoffgehalt dieser Verschleißschutzschicht soll zwischen 11 und 17 Gew.-% liegen, wobei Härten HV dieser Schicht zwischen 1300 und 2000 erreicht werden sollen. Nachteilig ist hier festzustellen, daß sich je nach Stickstoffanteil das Verschleißverhalten der Schicht ändert. Bei einem Anteil von 11 Gew.-% N ist das Verschleißverhalten gegenüber einem Anteil von 17 Gew.-% N schlechter, wobei jedoch das Verhalten des Kolbenringes im Hinblick auf den Ölverbrauch wiederum verbessert wird.

Der JP-A 62058050 ist ein Kolbenring zu entnehmen, der laufflächenseitig eine etwa 5 µm dicke Verschleißschutzschicht aus TiN aufweist. Zwischen der Verschleißschutzschicht und der äußeren Kolbenring-Umfangsfläche befindet sich eine superharte Zwischenschicht aus Ti (C, N), TiC, SiC oder Al₂O₃, die eine Dicke von etwa 15 µm aufweist. Die Beschichtung der Kolbenring-Lauffläche erfolgt durch das Plasma-CVD-Verfahren bzw. durch Ionenplattierung.

Die nach den bekannten PVD-/CVD-Verfahren abgeschiedenen, zitierten Verschleißschutzschichten verfügen zwar über gute Festigkeits- und Brandspureigenschaften, wobei jedoch die Verschleißfestigkeit dieser Schichten nicht ausreichend hoch ist. Da sich diese Schichten auch nur in begrenzten Dicken ausführen lassen, werden die Forderungen an die Lebensdauer nicht erreicht, so daß sie, insbesondere für Motoren mit hoher Leistung, hohen Zylinderdrücken, Direkteinspritzung, Abgasrückführung und anderen Konstruktionsmerkmalen neuerer Motorentwicklungen, aber auch die Minimierung des Ölverbrauches, nicht optimal anwendbar sind.

Der Erfindung liegt die Aufgabe zugrunde, einen Kolbenring mit einer solchen Verschleißschutzschicht zu versehen, die im Hinblick auf die Brandspursicherheit optimiert ist, wobei gleichzeitig die tribologischen Eigenschaften verbessert werden. Darüber hinaus liegt der Erfindung auch die Aufgabe zugrunde, eine Verschleißschutzschicht für einen Kolbenring zu konzipieren, die zwar auf einer bekannten Abscheidungstechnologie beruht, jedoch gegenüber bisher bekannten Verschleißschutzschichten, insbesondere hinsichtlich der Standzeit, optimiert ist.

Diese Aufgabe wird gelöst durch einen Kolbenring mit einer, zumindest im Bereich der Lauffläche (2,5',6') vorgesehenen Verschleißschutzschicht (3,9) aus Aluminium und Sauerstoff, der Zusammensetzung AlₓO_{y} mit

x=1,9 bis 2,2 y=2,8 bis 3,1

und nach den PVD- oder CVD-Verfahren aufgebracht ist, wobei die Schichtdicke max. 100 µm, insbesondere 5 bis 50 µm, beträgt und eine Härte HV zwischen **1400** und **2000** aufweist.

Die erfindungsgemäße Verschleißschutzschicht besitzt eine hohe innere Festigkeit und läßt sich bei entsprechender Vorbehandlung mit ausgezeichneter Haftung auf die Kolbenringbasiswerkstoffe, wie Stahl und Gußeisen aufbringen. Sie verfügt darüber hinaus über eine hohe Brandspursicherheit sowie ein sehr gutes Eigenverschleißverhalten und greift den Gegenpartner, nämlich die Zylinderlaufbuchse, nicht an. Die Verschleißschutzschicht ist korrosionsfest gegenüber den im Verbrennungsraum auftretenden Medien und besitzt eine hinreichend hohe Wärmeleitfähigkeit, um den Wärmetransport vom Verbrennungsraum über Kolben und Kolbenringe an die Zylinderlauffläche ausreichend gut ausführen zu können.

Aluminium oder Sauerstoff sind hierbei in einem aufeinander abgestimmten Verhältnis in der Schicht einzubinden, so daß die vorab genannten Vorteile erreicht werden. Während zu hohe Anteile an Aluminium keine ausreichende Wirkung hinsichtlich Eigenverschleiß zeigen, verbessern geringe Anteile an Aluminium, zwar die Verschleißfestigkeit der Schicht, vermindern allerdings die Schichtduktilität, so daß Schichtanrisse und Ausbrüche im Motorbetrieb auftreten können.

Für ein optimiertes Laufverhalten hat sich eine Zusammensetzung der Form Al₂O₃ bewährt.

Die erfindungsgemäße Schichtkombination auf Basis von Aluminium und Sauerstoff vermindert gegenüber anderen, durch bekannte PVD- bzw. CVD-Verfahren, abgeschiedenen Schichten für Kolbenringe die Eigenspannung in der Schicht, so daß Schichtdicken bis zu 100 um erzeugt werden können. Bevorzugte Schichtdicken bei der Anwendung auf Kolbenringen, insbesondere laufflächenseitig, sind 5 bis 50 µm.

Der Erfindungsgegenstand ist anhand eines Ausführungsbeispiels in der Zeichnung dargestellt und wird wie folgt beschrieben. Es zeigen:
- Figur 1: Kompressionskolbenring mit laufflächenseitiger Verschleißschutzschicht;
- Figur 2: Ölabstreifkolbenring mit Verschleißschutzschicht.

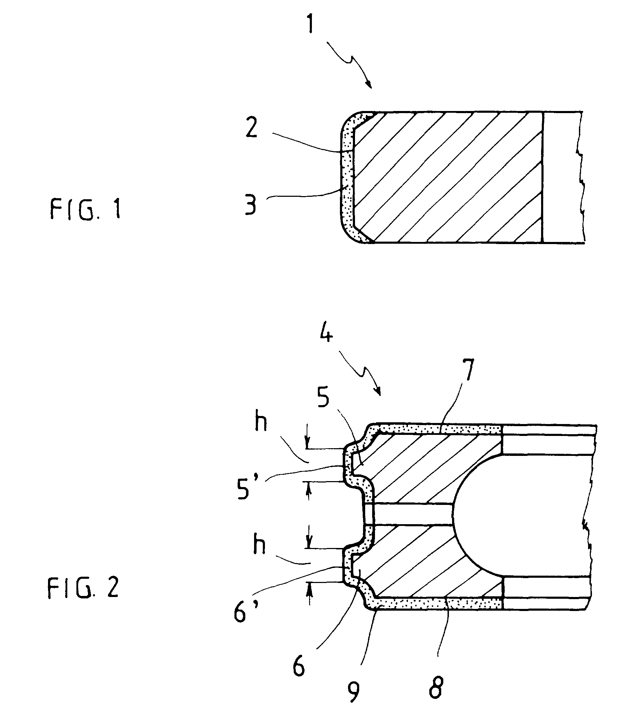

Figur 1 zeigt einen aus Gußeisen bestehenden Kompressionskolbenring 1, der im Bereich seiner Lauffläche 2 mit einer Verschleißschutzschicht 3 versehen ist. Die Verschleißschutzschicht besteht aus Aluminiumoxid der Zusammensetzung Zusammensetzung:

AlₓO_{y} mit x=1,9 bis 2,2 y= 2,8 bis 3,1

Das Aufbringen der Verschleißschutzschicht 3 auf Basis von Aluminium und Sauerstoff kann einerseits mit PVD-Verfahren (Physikalische Abscheidung aus der Dampfphase) und andererseits mit CVD-Verfahren (Chemische Abscheidung aus der Dampfphase) auf der Lauffläche 2 des Kompressionskolbenringes 1 mit einer Schichtdicke von 50 µm erfolgen.

Der Vorteil der PVD-Verfahren gegenüber den CVD-Verfahren besteht darin, daß die Beschichtungstemperaturen deutlich niedriger liegen. Die Auswahl des Abscheidungsverfahrens ist jedoch vom Anwendungsfall abhängig und wird vom zuständigen Fachmann ausgewählt. Die Verschleißschutzschicht 3 soll in diesem Beispiel nach dem PVD-Verfahren ausschließlich auf der Lauffläche 2 des Kompressionskolbenringes 1 abgeschieden sein.

Figur 2 zeigt einen aus Stahlband gebogenen Ölabstreifkolbenring 4, der zwei Laufstege 5,6 aufweist, die definierte Laufsteghöhen h haben. In diesem Beispiel sind sämtliche dem Verschleiß ausgesetzten Bereiche (Laufflächen 5', 6' sowie die Stirnflächen 7,8) mit einer Verschleißschutzschicht 9 folgender chemischer Zusammensetzung versehen:

AlₓO_{y} mit x=1,9 bis 2,2 y= 2,8 bis 3,1

Auch hier wurde die Verschleißschutzschicht 9 auf Basis von Aluminium und Sauerstoff nach dem bekannten PVD-Verfahren auf den genannten Flächen 5', 6', 7, 8 abgeschieden und soll eine Schichtdicke von 40 µm beinhalten.

Derartig abgeschiedene Aluminium-Sauerstoff-Verschleißschutzschichten 3,9 weisen gegenüber dem bekannten Stand der Technik eine hohe innere Festigkeit auf und lassen sich bei entsprechender Vorbehandlung des Kolbenringes 1,4 mit ausgezeichneter Haftung auf Kolbenringbasiswerkstoff, wie Stahl oder Gußeisen, aufbringen. Die Verschleißschutzschichten 3,9 verfügen über eine hohe Brandspursicherheit, optimale Eigenverschleißeigenschaften und sind korrosionsfest gegenüber den, im Verbrennungsraum auftretenden Medien.

## Patentansprüche

1. Kolbenring mit einer, zumindest im Bereich der Lauffläche (2,5',6') vorgesehenen Verschleißschutzschicht aus Aluminium und Sauerstoff (3,9), folgender Zusammensetzung AlₓO_{y} mit x=1,9 bis 2,2 und y= 2,8 bis 3,1 und mit PVD- oder CVD-Verfahren aufgebracht ist, wobei die Schichtdicke max. 100 µm, insbesondere 5 bis 50 µm, beträgt und eine Härte HV zwischen **1400** und **2000** aufweist.

2. Verschleißschutzschicht auf Basis von Aluminium und Sauerstoff für Kolbenringe (1,4) mit der Zusammensetzung AlₓO_{y} mit x=1,9 bis 2,2 y= 2,8 bis 3,1und die Schicht (3,9) mit einer Schichtdicke von bis zu 100 µm, insbesondere 5 bis 50 µm, nach den PVD- oder CVD-Verfahren, zumindest auf die Lauffläche (2,5',6') des Kolbenringes (1,4) aufgebracht ist.

3. Verschleißschutzschicht nach Anspruch 2, worin die Schicht (3, 9) mit einer Dicke von 5 bis 20 µm, zumindest auf die Lauffläche (2,5',6') des Kolbenringes (1,4) aufgebracht ist.

4. Verschleißschutzschicht nach Anspruch 2 und 3, **dadurch gekennzeichnet, daß** die Schicht (3,9) auf allen dem mittel- oder unmittelbaren Verschleiß ausgesetzten Flächenbereichen (2,5',6',7,8) des Kolbenringes (1,4) aufgebracht ist.

5. Verschleißschutzschicht nach Anspruch 2 bis 4, **dadurch gekennzeichnet, daß** die Verschleißschutzschicht (3,9) eine Härte HV von 1400 bis 2000 aufweist.
